(19) Europäisches Patentamt

European Patent Office

Office européen des brevets

(11) **EP 4 654 124 A1**

(12) **EUROPEAN PATENT APPLICATION**
published in accordance with Art. 153(4) EPC

(43) Date of publication:
26.11.2025 Bulletin 2025/48

(21) Application number: 23917687.8

(22) Date of filing: 11.12.2023

(51) International Patent Classification (IPC):
*G06T 7/00* (2017.01)   *G06T 7/70* (2017.01)

(52) Cooperative Patent Classification (CPC):
**G06V 20/46; G06T 7/00; G06T 7/70; G06T 7/75;**
**G06V 40/103;** G06T 2207/30196

(86) International application number:
**PCT/JP2023/044151**

(87) International publication number:
**WO 2024/154476 (25.07.2024 Gazette 2024/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.01.2023 JP 2023004639**

(71) Applicant: FUJITSU LIMITED
**Kawasaki-shi, Kanagawa 211-8588 (JP)**

(72) Inventors:
• **MOTEKI, Atsunori**
  **Kawasaki-shi, Kanagawa 211-8588 (JP)**
• **HIRAI, Yukio**
  **Kawasaki-shi, Kanagawa 211-8588 (JP)**
• **SUZUKI, Genta**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **IDENTIFICATION PROGRAM, IDENTIFICATION METHOD, AND INFORMATION PROCESSING DEVICE**

(57)     A specifying program causes a computer to execute the processing of acquiring a video in which a person is captured generating two-dimensional skeleton information of the person from the video that has been acquired generating relative coordinates of a three-dimensional skeleton position based on a position of a waist of the person based on the two-dimensional skeleton information generating absolute coordinates of a three-dimensional skeleton position of a plurality of predetermined parts of the person estimating a relationship between the relative coordinates and the absolute coordinates based on absolute coordinates of the three-dimensional skeleton position corresponding to a part of the person that is not hidden and relative coordinates of the three-dimensional skeleton position corresponding to the part of the person that is not hidden and specifying absolute coordinates of a skeleton position of the person including a part other than the part that is not hidden or a part other than the predetermined parts based on the relationship that has been estimated.

FIG.9
DIAGRAM FOR EXPLAINING RELATIONSHIP BETWEEN TWO-DIMENSIONAL
COORDINATES AND THREE-DIMENSIONAL COORDINATES

## Description

Technical Field

The present invention relates to a specifying program and the like.

Background Art

As technology for expressing, in a virtual space, an object, a person, or the like present in the physical space of the real world, there is technology called a digital twin. For example, in the digital twin technology, by utilizing the Internet of Things (IoT) or the like, data is collected in real time from a production line, equipment, or the like of a factory that is actually operating, whereby various simulations are executed. By repeatedly executing processing of notifying the simulation result in the virtual space to the site and feeding back the situation of the site to the virtual space, it is possible to improve the production efficiency and to prevent in advance an accident or the like that may occur.

In a case where a person present in the physical space is expressed in a virtual space, the related art is used in which a person is extracted from image data of a camera that has captured the physical space, and the position of the extracted person in the virtual space is estimated.

For example, in the related art, skeleton information of the person extracted from the image data is specified. The skeleton information is information in which two-dimensional coordinates are set for a plurality of parts (joints) defined in a human body model. In the related art, three-dimensional skeleton information on a virtual space is estimated using coordinates of a foot part and a waist part among parts of the skeleton information.

Citation List

Patent Literature

Patent Literature 1: Japanese Laid-open Patent Publication No. 2022-176481

Summary

Technical Problem

However, in the above-described related art, there is a problem that the estimation accuracy of skeleton information of a person decreases when occlusion occurs in a predetermined part. The predetermined part includes a foot part, a waist part, or others.

In one aspect, the object of the present invention is to provide a specifying program, a specifying method, and an information processing device capable of improving estimation accuracy of skeleton information of a person.

Solution to Problem

According to an aspect of the embodiment of the invention, a specifying program causes a computer to execute the processing of acquiring a video in which a person is captured generating two-dimensional skeleton information of the person from the video that has been acquired generating relative coordinates of a three-dimensional skeleton position based on a position of a waist of the person based on the two-dimensional skeleton information generating absolute coordinates of a three-dimensional skeleton position of a plurality of predetermined parts of the person estimating a relationship between the relative coordinates and the absolute coordinates based on absolute coordinates of the three-dimensional skeleton position corresponding to a part of the person that is not hidden and relative coordinates of the three-dimensional skeleton position corresponding to the part of the person that is not hidden and specifying absolute coordinates of a skeleton position of the person including a part other than the part that is not hidden or a part other than the predetermined parts based on the relationship that has been estimated.

Advantageous Effects of Invention

The estimation accuracy of skeleton information of a person can be improved.

Brief Description of Drawings

FIG. 1 is a diagram illustrating a system according to the present embodiment.
FIG. 2 is a diagram illustrating an example of image data used in preprocessing.
FIG. 3 is a diagram illustrating an example of a 3D model.
FIG. 4 is a diagram illustrating an example of estimation results of the position and the attitude.
FIG. 5 is a diagram illustrating an example of four types of coordinate systems.
FIG. 6 is a diagram for explaining the processing of estimating a homography matrix.
FIG. 7 is a diagram illustrating an example of image data used in sequential processing.
FIG. 8 is a diagram illustrating an example of two-dimensional skeleton information.
FIG. 9 is a diagram for explaining the relationship between two-dimensional coordinates and three-dimensional coordinates.
FIG. 10 is a functional block diagram illustrating the configuration of an information processing device according to the present embodiment.
FIG. 11 is a flowchart illustrating a processing procedure of preprocessing.
FIG. 12 is a flowchart illustrating a processing procedure of sequential processing.

FIG. 13 is a diagram illustrating an example of the hardware configuration of a computer that implements functions similar to those of the information processing device according to the embodiment.

Description of Embodiments

Hereinafter, embodiments of a specifying program, a specifying method, and an information processing device disclosed herein will be described in detail with reference to the drawings. Note that the present invention is not limited by the embodiments.

Embodiments

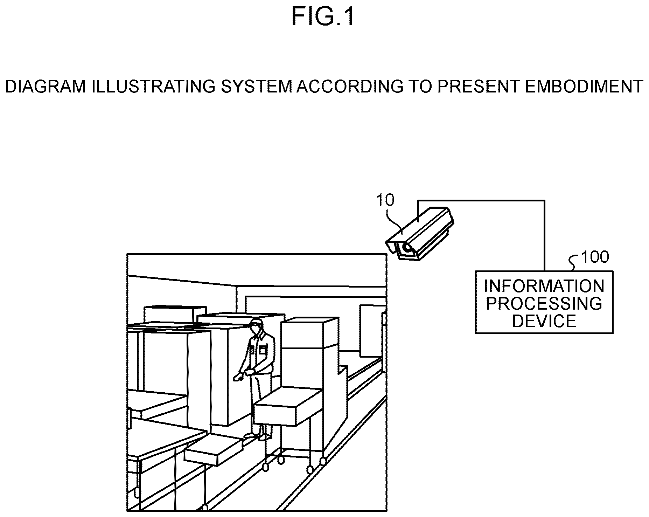

An example of a system according to the present embodiment will be described. FIG. 1 is a diagram illustrating a system according to the present embodiment. For example, the system of the present embodiment includes a camera 10 and an information processing device 100. The camera 10 and the information processing device 100 are connected to each other via a network. Although only the camera 10 is illustrated in FIG. 1, the system according to the present embodiment may further include other cameras.

The camera 10 is installed at a predetermined position in a factory. For example, various types of equipment are installed in the factory. The camera 10 captures an image (video) of the inside of the factory and transmits data of the captured image to the information processing device 100. In the following description, data of an image is referred to as "image data". Camera identification information for identifying the camera 10 that has captured the image data is added to the image data. In the following description, image data is used; however, video data may be used. The video data is information including time-series image data.

The information processing device 100 is a device that estimates the position in a virtual space on the basis of the position in the physical space of a person included in image data. In the present embodiment, a three-dimensional coordinate system in a virtual space will be described as a "global coordinate system". For example, the information processing device 100 executes preprocessing and sequential processing.

The information processing device 100 estimates, by preprocessing, a homography matrix corresponding to each key part among a plurality of parts of a person. Each homography matrix is used when two-dimensional coordinates of one of key parts of the person are converted into coordinates of the global coordinate system.

The information processing device 100 selects a reliable key part from coordinates of key parts in the global coordinate system estimated on the basis of a plurality of homography matrices by sequential processing. The reliable key part is a part that is not hidden in the image data.

The information processing device 100 estimates similarity transformation parameters from the relationship between coordinates in the local coordinate system corresponding to the selected key part and coordinates in the global coordinate system. The similarity transformation parameters are information indicating the relationship between the local coordinate system and the global coordinate system. The information processing device 100 converts coordinates of each part in the local coordinate system into coordinates of the part in the global coordinate system by using the similarity transformation parameter.

Hereinafter, the preprocessing and the sequential processing executed by the information processing device 100 will be described in more detail.

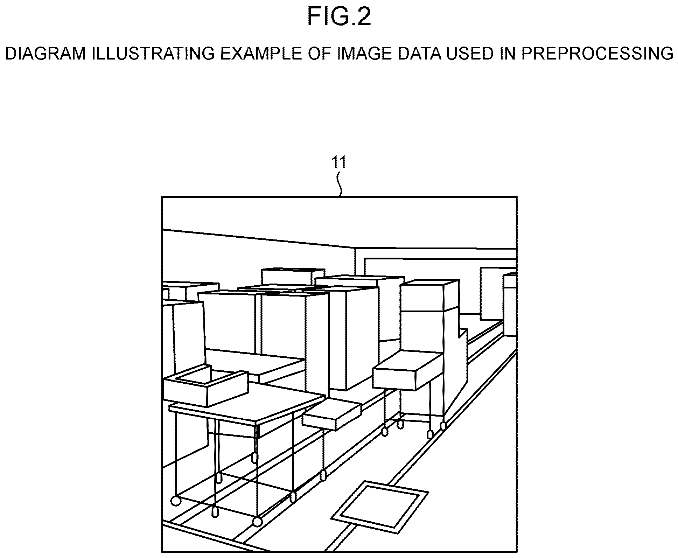

The preprocessing executed by the information processing device 100 will be described. The information processing device 100 acquires, from the camera 10, image data at timing when no person is captured and including factory equipment. FIG. 2 is a diagram illustrating an example of image data used in the preprocessing. As illustrated in FIG. 2, image data 11 includes no person but includes the factory equipment. It is based on the premise that the factory equipment included in the image data 11 is known.

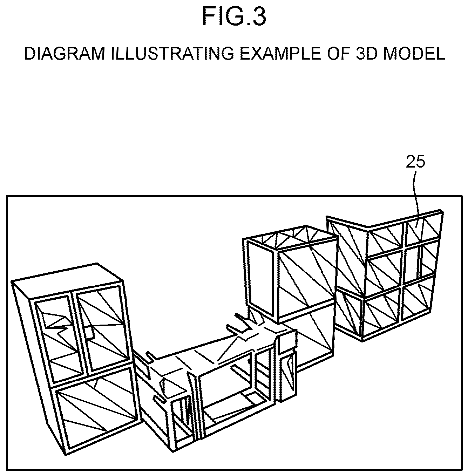

The information processing device 100 reads a preset 3D model of the factory equipment. FIG. 3 is a diagram illustrating an example of the 3D model. For example, a data format of a 3D model 25 is an STL/OBJ format representing three-dimensional shapes with triangular meshes connected. The information processing device 100 extracts each of a plurality of line segments indicating the outer shape features of the 3D model 25 as a "ridgeline".

The information processing device 100 projects extracted ridgelines on the image data 11 on the basis of initial camera parameters of the camera 10. The camera parameters correspond to internal parameters and external parameters and include a focal length f, a rotation matrix R, and a translation vector T. The information processing device 100 receives an operation by a user, performs matching between feature lines extracted from the image data 11 and the projected ridgelines to adjust the camera parameters. A feature line is an edge line and is extracted on the basis of LSD or the like.

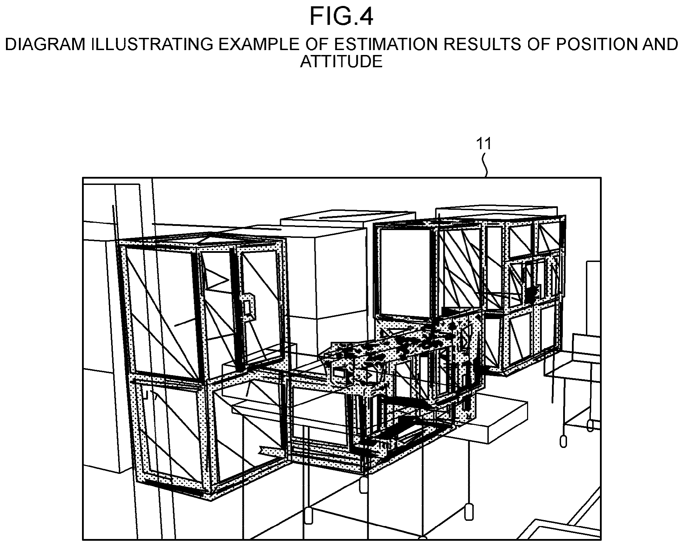

FIG. 4 is a diagram illustrating an example of estimation results of the position and the attitude. In the example illustrated in FIG. 4, the feature lines of the image data 11 match the projected ridgelines since the camera parameters are correctly adjusted. The position and the attitude of the equipment in the physical space are associated with the position and the attitude of the equipment in the global coordinate system (3D model 25) by the adjusted camera parameters.

Subsequently, the information processing device 100 estimates the heights of the head, the shoulders, and the waist of the person on the basis of skeleton shape data prepared in advance. In the present embodiment, the skeleton shape data prepared in advance is skeleton shape data of an adult male.

With respect to the skeleton shape data, let the height of the head from the ground be "h", the height of a shoulder from the ground be "s", and the height of the waist from the ground be "w". The information processing device 100 sets a coordinate system of a plane corresponding to the head, the shoulders, the waist, and the ground of the person on a 3D model (for example, the 3D model 25) of the equipment disposed in the global coordinate system. The position and the attitude of the 3D model are set by the adjusted camera parameters so as to match the position and the attitude of the equipment in the physical space.

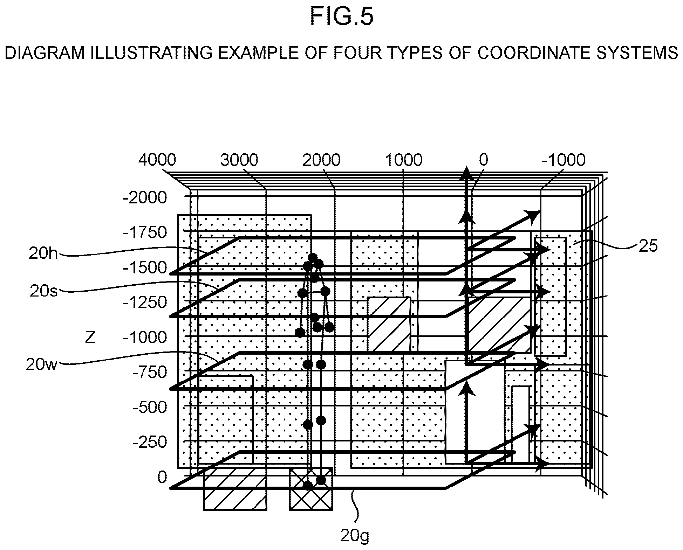

FIG. 5 is a diagram illustrating an example of four types of coordinate systems. For example, the height from the ground in the global coordinate system to the coordinate origin of the 3D model 25 of the equipment is denoted as "t". A translation vector T of an adjusted camera parameters used when the 3D model 25 is disposed is denoted as (x, y, z).

The information processing device 100 sets, as a "head position coordinates plane 20h", a coordinate system obtained by translating a planar coordinate system by "h-t" in the z-axis direction in the global coordinate system in which the 3D model 25 is disposed. A translation vector Th regarding the head position coordinates plane 20h is (x, y, z - (h - t)).

The information processing device 100 sets, as a "shoulder position coordinates plane 20s", a coordinate system obtained by translating a planar coordinate system by "s - t" in the z-axis direction. A translation vector Ts regarding the shoulder position coordinates plane 20s is (x, y, z - (s - t)).

The information processing device 100 sets, as a "waist position coordinates plane 20w", a coordinate system obtained by translating a planar coordinate system by "w - t" in the z-axis direction. A translation vector Tw of the waist position coordinates plane 20w is (x, y, z - (w - t)).

The information processing device 100 sets, as a "ground surface position coordinates plane 20g", a coordinate system obtained by translating a planar coordinate system by "-t" in the z-axis direction. A translation vector Tg of the ground surface position coordinates plane 20g is (x, y, z - (-t)).

After setting the head position coordinates plane 20h, the shoulder position coordinates plane 20s, the waist position coordinates plane 20w, and the ground surface position coordinates plane 20g, the information processing device 100 estimates four types of homography matrices $H_h$, $H_s$, $H_w$, and $H_g$.

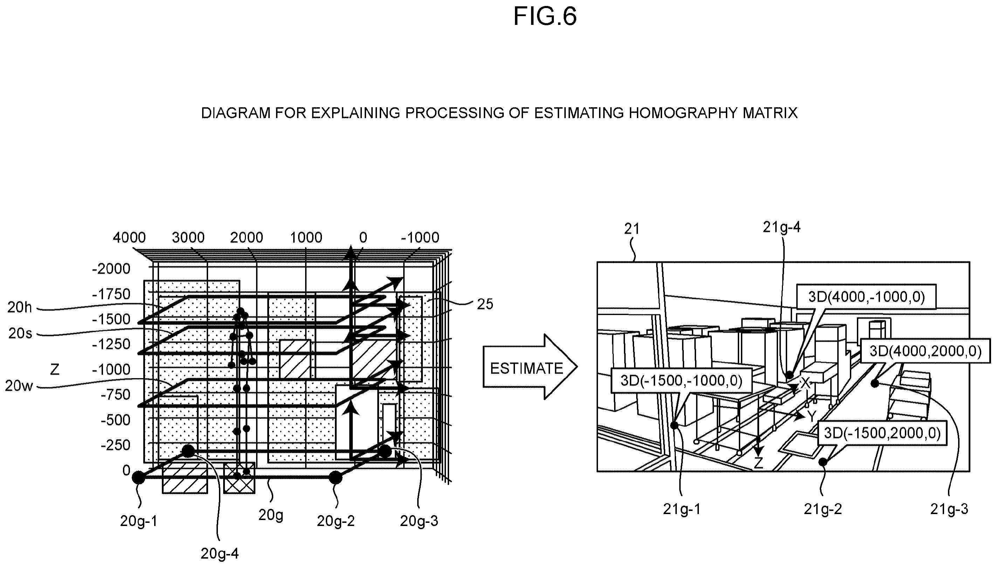

FIG. 6 is a diagram for explaining processing of estimating a homography matrix. In FIG. 6, a process of estimating a homography matrix using the ground surface position coordinates plane 20g will be described. The information processing device 100 receives designation of points 20g-1, 20g-2, 20g-3, and 20g-4 at four corners of the ground surface position coordinates plane 20g. The (x, y) coordinate area surrounded by the points 20g-1 to 20g-4 at the four corners is a region in which the person moves and may be designated in advance. For example, the user operates the input unit to designate the points 20g-1 to 20g-4 at the four corners.

The information processing device 100 estimates corresponding points on the image data 21 corresponding to the points 20g-1 to 20g-4 at the four corners on the basis of the perspective projection system. For example, the information processing device 100 estimates a corresponding point 21g-1 corresponding to the point 20g-1 on the ground surface position coordinates plane 20g. The information processing device 100 estimates a corresponding point 21g-2 corresponding to the point 20g-2 on the ground surface position coordinates plane 20g. The information processing device 100 estimates a corresponding point 21g-3 corresponding to the point 20g-3 on the ground surface position coordinates plane 20g. The information processing device 100 estimates a corresponding point 21g-4 corresponding to the point 20g-4 on the ground surface position coordinates plane 20g.

The information processing device 100 estimates the homography matrix $H_g$ on the basis of a direct linear transformation method (DLT) from the relationship among the points 20g-1 to 20g-4 at the four corners on the ground surface position coordinates plane 20g and the corresponding points 21g-1 to 21g-4. For example, the information processing device 100 executes processing described in "R. Hartley and A. Zisserman. Multiple View Geometry In Computer Vision. Cambridge University Press, second edition, 2003." as the DLT method.

Similarly to the ground surface position coordinates plane 20g, the information processing device 100 estimates a homography matrix H of each of the head position coordinates plane 20h, the shoulder position coordinates plane 20s, and the waist position coordinates plane 20w.

A homography matrix H corresponding to the head position coordinates plane 20h is denoted as "homography matrix $H_h$". A homography matrix H corresponding to the shoulder position coordinates plane 20s is denoted as "homography matrix $H_s$". A homography matrix H corresponding to the waist position coordinates plane 20w is denoted as "homography matrix $H_w$". A homography matrix H corresponding to the ground surface position coordinates plane 20g is denoted as "homography matrix $H_g$". As expressed in Equation (1), a homography matrix H is a matrix of three rows and three columns.

$$H = \begin{pmatrix} h_{11} & h_{12} & h_{13} \\ h_{21} & h_{22} & h_{23} \\ h_{31} & h_{32} & 1 \end{pmatrix} \qquad \cdots (1)$$

With the information processing device 100 executing the preprocessing in the above manner, the homography matrices $H_h$, $H_s$, $H_w$, and $H_g$ of the head position coordinates plane 20h, the shoulder position coordinates plane 20s, the waist position coordinates plane 20w, and the ground surface position coordinates plane 20g are estimated, respectively. The homography matrices $H_h$, $H_s$, $H_w$, and $H_g$ are collectively referred to as "homography matrices H" as appropriate.

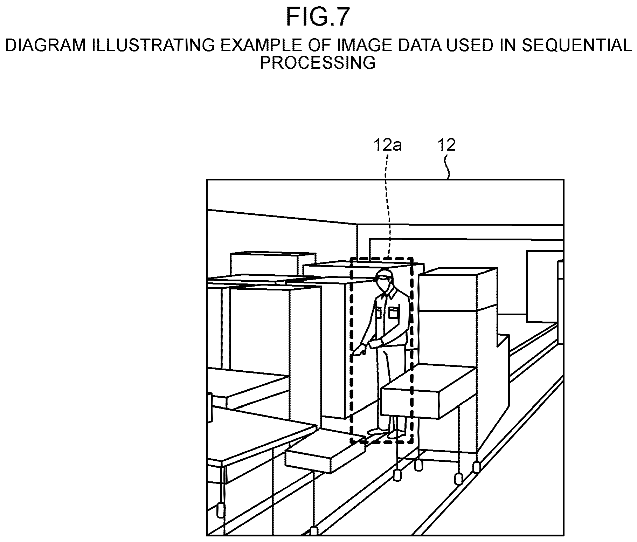

Next, the sequential processing executed by the information processing device 100 will be described. The information processing device 100 acquires image data including a person from the camera 10. FIG. 7 is a diagram illustrating an example of image data used in the sequential processing. The information processing device 100 extracts a rectangular region 12a of a person from an image data 12 that has been acquired. For example, the information processing device 100 inputs the image data to a first machine learning model corresponding to You Only Look Once (YOLO) and extracts the rectangular region surrounding the periphery of the person. The information processing device 100 may use the technology of YOLO described in "Redmon et al., You Only Look Once: Unified, Real-Time Object Detection, In Proc. IEEE Conference on Computer Vision and Pattern Recognition (CVPR), pp. 779-788, 2016.".

In the case where the rectangular region of the person is extracted, the information processing device 100 detects two-dimensional skeleton information of the person on the basis of the rectangular region of the person. For example, the information processing device 100 may detect the two-dimensional skeleton information using technology described in "Y. Chen et al., Cascaded Pyramid Network for Multi-person Pose Estimation, In Proc. IEEE Conference on Computer Vision and Pattern Recognition (CVPR), pp. 7103-7112, 2018.". The information processing device 100 may detect the two-dimensional skeleton information of the person by using a second machine learning model in which input is an image of a rectangular region of a person and output is two-dimensional skeleton information.

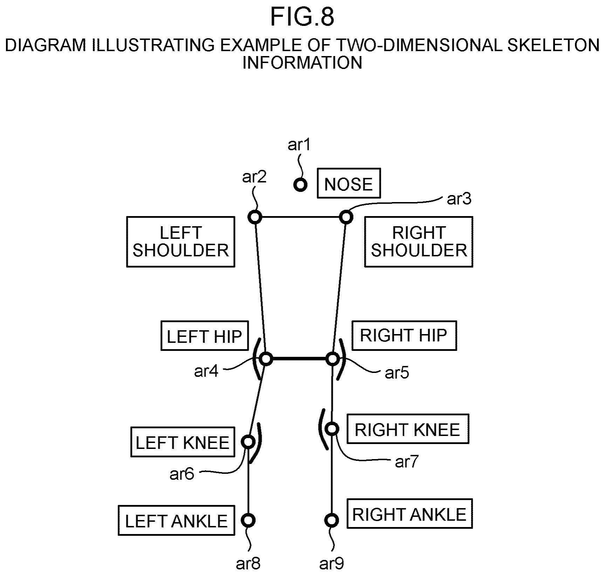

FIG. 8 is a diagram illustrating an example of two-dimensional skeleton information. As illustrated in FIG. 8, the two-dimensional skeleton information includes parts (joints) ar1, ar2, ar3, ar4, ar5, ar6, ar7, ar8, and ar9. The part ar1 corresponds to the head. The parts ar2 and ar3 correspond to both shoulders (left shoulder and right shoulder). The parts ar4 and ar5 correspond to the waist. Note that the waist may be a part between the parts ar4 and ar5. The parts ar6 and ar7 correspond to both knees (left knee and right knee). The parts ar8 and ar9 correspond to both feet (left foot and right foot).

The information processing device 100 estimates "coordinates of a local coordinate system" indicating relative three-dimensional coordinates of each part with respect to the position of a reference part on the basis of the two-dimensional skeleton information. For example, the reference part is defined as the waist. The information processing device 100 may estimate coordinates in the local coordinate system from the two-dimensional skeleton information by executing processing described in "J. Martinez et al., A simple yet effective baseline for 3d human pose estimation, In Proc. IEEE International Conference on Computer Vision (ICCV), pp. 2659-2668, 2017.". The coordinates in the local coordinate system are an example of "relative coordinates of a three-dimensional skeleton position".

The information processing device 100 estimates coordinates of a key part in the global coordinate system on the basis of the two-dimensional skeleton information. The key parts are the head, both shoulders, the waist, and both feet. In the global coordinate system, coordinates of a key part in the global coordinate system are an example of "absolute coordinates of a three-dimensional skeleton position".

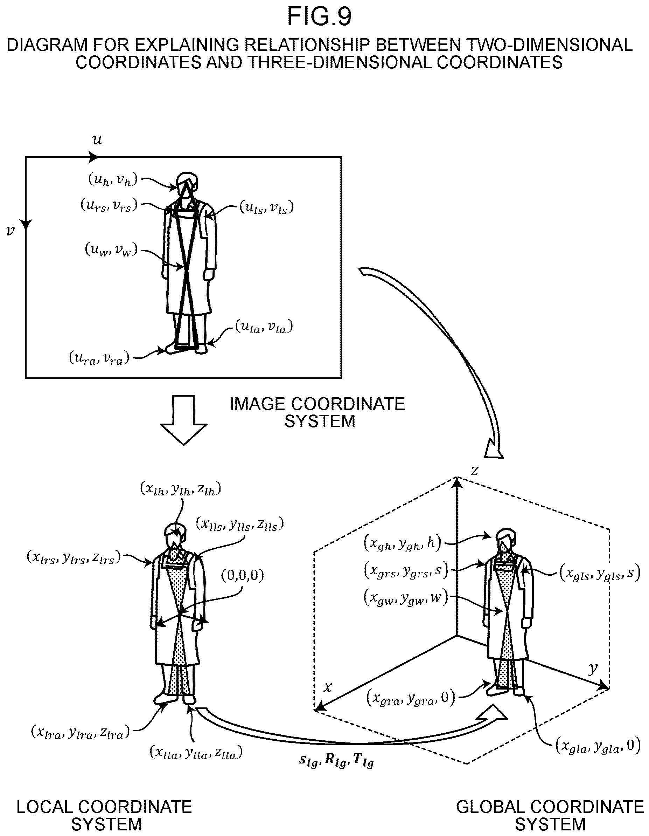

FIG. 9 is a diagram for explaining the relationship between two-dimensional coordinates and three-dimensional coordinates. Coordinates of a key part included in the two-dimensional skeleton information are coordinates in the image coordinate system of the camera 10. In the image coordinate system, the coordinates of the head are denoted as $(u_h, v_h)$. The coordinates of the right shoulder are $(u_{rs}, v_{rs})$. The coordinates of the left shoulder are $(u_{ls}, v_{ls})$. The coordinates of the waist are $(u_w, v_w)$. The coordinates of the right foot are $(u_{ra}, v_{ra})$. The coordinates of the left foot are $(u_{la}, v_{la})$.

In the local coordinate system, the coordinates of the head are denoted as $(x_{lh}, y_{lh}, z_{lh})$. The coordinates of the right shoulder are $(x_{lrs}, y_{lrs}, z_{lrs})$. The coordinates of the left shoulder are $(x_{lls}, y_{lls}, z_{lls})$. The coordinates of the waist are $(x_{lw}, y_{lw}, z_{lw})$. Note that, in a case where the coordinates of the waist are used as the reference, the coordinates of the waist in the local coordinate system are $(0, 0, 0)$. The coordinates of the right foot are $(x_{lra}, y_{lra}, z_{lra})$. The coordinates of the left foot are $(x_{lla}, y_{lla}, z_{lla})$.

In the global coordinate system, values for the head, both shoulders, the waist, and the foot in the z axis are known with the skeleton shape data used. In the global coordinate system, the coordinates of the head are denoted as $(x_{gh}, y_{gh}, h)$. The coordinates of the right shoulder are $(x_{grs}, y_{grs}, s)$. The coordinates of the left shoulder are $(x_{gls}, y_{gls}, s)$. The coordinates of the waist are $(x_{gw}, y_{gw}, w)$. The coordinates of the right foot are $(x_{gra}, y_{gra}, 0)$. The coordinates of the left foot are $(x_{gla}, y_{gla}, 0)$.

On the basis of a homography matrix H, the information processing device 100 converts, from the two-dimensional skeleton information, into coordinates of a key part in the global coordinate system. For example, the information processing device 100 estimates x and y coordinates among the three-dimensional coordinates of the head in the global coordinate system on the basis of Equation (2). Note that among the three-dimensional coordinates of the head, the z coordinate is "h".

$$\begin{pmatrix} x_{gh} \\ y_{gh} \\ 1 \end{pmatrix} = H_h \begin{pmatrix} u_{lh} \\ v_{lh} \\ 1 \end{pmatrix} \qquad \cdots (2)$$

The information processing device 100 estimates x and y coordinates among the three-dimensional coordinates of the right shoulder in the global coordinate system on the basis of Equation (3). Note that, among the three-dimensional coordinates of the right shoulder, the z coordinate is "s".

$$\begin{pmatrix} x_{grs} \\ y_{grs} \\ 1 \end{pmatrix} = H_s \begin{pmatrix} u_{rs} \\ v_{rs} \\ 1 \end{pmatrix} \qquad \cdots (3)$$

The information processing device 100 estimates x and y coordinates among the three-dimensional coordinates of the left shoulder in the global coordinate system on the basis of Equation (4). Note that, among the three-dimensional coordinates of the left shoulder, the z coordinate is "s".

$$\begin{pmatrix} x_{gls} \\ y_{gls} \\ 1 \end{pmatrix} = H_s \begin{pmatrix} u_{ls} \\ v_{ls} \\ 1 \end{pmatrix} \qquad \cdots (4)$$

The information processing device 100 estimates x and y coordinates among the three-dimensional coordinates of the waist in the global coordinate system on the basis of Equation (5). Note that, among the three-dimensional coordinates of the waist, the z coordinate is "w".

$$\begin{pmatrix} x_{gw} \\ y_{gw} \\ 1 \end{pmatrix} = H_w \begin{pmatrix} u_{lw} \\ v_{lw} \\ 1 \end{pmatrix} \qquad \cdots (5)$$

The information processing device 100 estimates x and y coordinates among the three-dimensional coordinates of the right foot in the global coordinate system on the basis of Equation (6). Note that, among the three-dimensional coordinates of the right foot, the z coordinate is "0".

$$\begin{pmatrix} x_{gra} \\ y_{gra} \\ 1 \end{pmatrix} = H_g \begin{pmatrix} u_{ra} \\ v_{ra} \\ 1 \end{pmatrix} \qquad \cdots (6)$$

The information processing device 100 estimates x and y coordinates among the three-dimensional coordinates of the left foot in the global coordinate system on the basis of Equation (7). Note that, among the three-dimensional coordinates of the left foot, the z coordinate is "0".

$$\begin{pmatrix} x_{gla} \\ y_{gla} \\ 1 \end{pmatrix} = H_g \begin{pmatrix} u_{la} \\ v_{la} \\ 1 \end{pmatrix} \qquad \cdots (7)$$

After calculating the coordinates of the key parts (head, both shoulders, waist, and both feet) in the global coordinate system, the information processing device 100 calculates the reliability of the coordinates of each key part. The range of values of reliability is set to "0 to 1". The information processing device 100 arranges the key parts on the basis of the coordinates of the key parts and sets a larger reliability for more appropriate coordinates of a key part from the perspective of the positional relationship among the key parts. For example, in a case where the distance between the waist and the head, the distance between the waist and both shoulders (right shoulder and left shoulder), and the distance between the waist and the right foot are allowable distances, and the distance between the waist and the left foot exceeds an allowable range, the information processing device 100 sets the reliability of the coordinates of the waist, both shoulders, and the right foot to be higher than the reliability for the left foot.

Note that the information processing device 100 may calculate the reliability of coordinates of each of the key parts using other types of related art. The reliability of coordinates of a key part affected by occlusion is lower than the reliability of coordinates of a key part not affected by occlusion. For example, in a case where the right foot of the person included in the image data is hidden and the left foot is not hidden, the reliability of the coordinates of the right foot is lower than the reliability of the coordinates of the left foot.

The information processing device 100 selects, from among the key parts, a key part corresponding to coordinates whose reliability is greater than or equal to a threshold. In a case where the number of sets of coordinates at which the reliability is greater than or equal to the threshold is less than three, the information processing device 100 sorts the coordinates of the key parts in descending order of the reliability and selects key parts corresponding to the top three sets of coordinates. In the following description, a key part selected on the basis of the reliability is referred to as a "selected part".

The information processing device 100 estimates similarity transformation parameters for transforming coordinates in a local coordinate system into coordinates in the global coordinate system on the basis of the relationship between the coordinates in the local coordinate system of the selected part and the coordinates of the global coordinate system of the selected part. The similarity transformation parameters include a scale $s_{lg}$, a rotation matrix $R_{lg}$, and a translation vector $T_{lg}$. For example, the information processing device 100 may estimate the similarity transformation parameters using technology described in "K. Mardia et al., Multivariate Analysis. Academic Press, 1979.".

The information processing device 100 can convert coordinates $(x_l, y_l, z_l)$ of a local coordinate system into coordinates $(x_g, y_g, z_g)$ of the global coordinate system by Equation (8) by estimating the similarity transformation parameters.

$$\begin{pmatrix} x_g \\ y_g \\ z_g \end{pmatrix} = s_{lg} R_{lg} \begin{pmatrix} x_l \\ y_l \\ z_l \end{pmatrix} + T_{lg} \qquad \cdots (8)$$

As described above, the information processing device 100 according to the present embodiment selects a key part whose reliability is higher than or equal to the threshold among the coordinates of the key parts in the global coordinate system estimated on the basis of the plurality of homography matrices H. The information processing device 100 estimates the similarity transformation parameters from the relationship between the coordinates in the local coordinate system corresponding to the selected key part and the coordinates in the global coordinate system and transforms coordinates of each part in the local coordinate system into coordinates of the part in the global coordinate system by using the similarity transformation parameters. Since the information processing device 100 estimates the similarity transformation parameters using coordinates of a highly reliable key part other than a key part where occlusion has occurred, it is possible to accurately estimate the three-dimensional coordinates of each of the parts of the person in the global coordinate system.

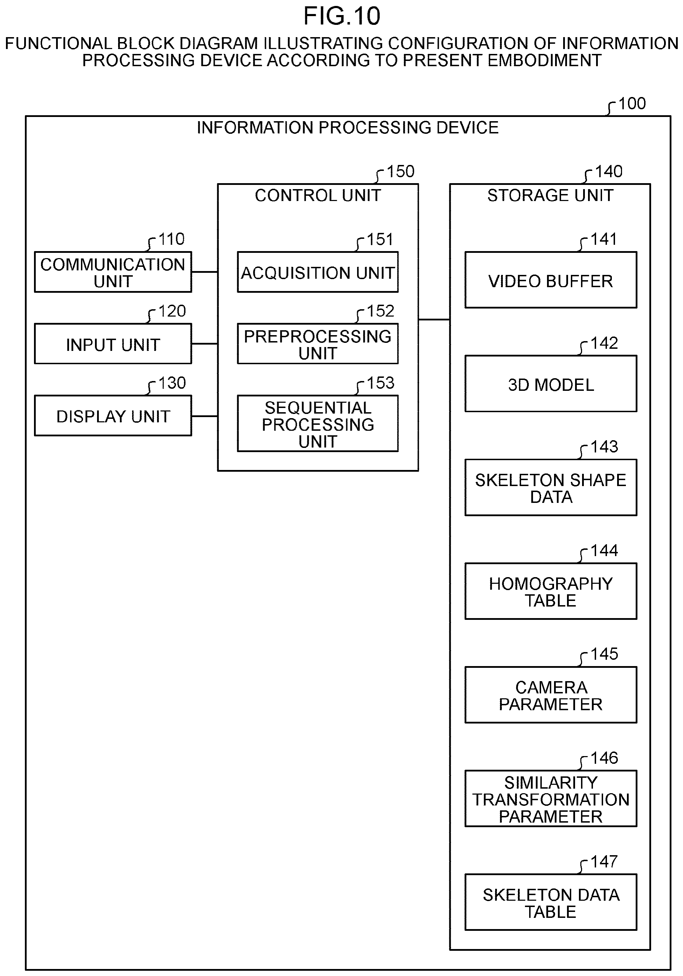

Next, a configuration example of the information processing device 100 that executes the above-described preprocessing and sequential processing will be described. FIG. 10 is a functional block diagram illustrating the configuration of the information processing device according to the present embodiment. As illustrated in FIG. 10, the information processing device 100 includes a communication unit 110, an input unit 120, a display unit 130, a storage unit 140, and a control unit 150.

The communication unit 110 executes data communication with the camera 10, an external device, and the like via a network. The communication unit 110 is a network interface card (NIC) or the like. For example, the communication unit 110 receives image data from the camera 10.

The input unit 120 is an input device that inputs various types of information to the control unit 150 of the information processing device 100. For example, the input unit 120 corresponds to a keyboard, a mouse, a touch panel, or the like. The user operates the input unit 120 to perform various operations related to alignment between a feature line and a ridgeline.

The display unit 130 is a display device that displays information output from the control unit 150. For example, the display unit 130 displays a feature line and a ridgeline on the image data.

The storage unit 140 includes a video buffer 141, a 3D model 142, skeleton shape data 143, a homography table 144, camera parameters 145, similarity transformation parameters 146, and a skeleton data table 147. The storage unit 140 is a storage device such as a memory.

The video buffer 141 holds image data captured by the camera 10. For example, the video buffer 141 holds image data in association with camera identification information.

The 3D model 142 corresponds to the 3D model 25 described in FIG. 3. For example, the 3D model 142 is generated on the basis of CAD data. The CAD data associates straight line identification information, start point coordinates, and end point coordinates. The straight line identification information identifies a straight line (side) of the three-dimensional CAD model. The start point coordinates are three-dimensional coordinates of the start point of a straight line identified by the straight line identification information. The end point coordinates are three-dimensional coordinates of the end point of the straight line identified by the straight line identification information.

The skeleton shape data 143 is information in which each part of the person is associated with three-dimensional coordinates of the part. Each of the parts of the person corresponds to ar1 to ar9 of the human body model described in FIG. 8. Note that the waist may be a part between the parts ar4 and ar5.

The homography table 144 stores homography matrices $H_h$, $H_s$, $H_w$, and $H_g$.

The camera parameters 145 include the focal length f, rotation R, and translation T with regards to the external parameters and the internal parameters of the camera 10. The camera parameters 145 are determined by matching the feature lines and the ridgelines in the preprocessing. It is based on the premise that initial values of the camera parameters 145 are set in advance.

The similarity transformation parameters 146 include a scale $s_{lg}$, a rotation matrix $R_{lg}$, and a translation vector $T_{lg}$. The similarity transformation parameters 146 are determined by the sequential processing.

The skeleton data table 147 holds time-series skeleton information of the person in the global coordinate system.

The control unit 150 includes an acquisition unit 151, a preprocessing unit 152, and a sequential processing unit 153. The control unit 150 is a central processing unit (CPU), a graphics processing unit (GPU), or the like.

The acquisition unit 151 acquires image data from the camera 10. The image data is set with the camera identification information of the camera 10 that has captured the image data. The acquisition unit 151 stores the image data in the video buffer 141 in association with the camera identification information.

The preprocessing unit 152 estimates the homography matrices $H_h$, $H_s$, $H_w$, and $H_g$ by executing the preprocessing described above and registers the estimation result in the homography table 144.

For example, the preprocessing unit 152 acquires the image data 11, in which no person is captured, from the video buffer 141 and reads the 3D model 142. The preprocessing unit 152 extracts a feature line from the image data 11 and projects a ridgeline of the 3D model 142 on the image data. The preprocessing unit 152 causes the display unit 130 to display the feature line on the image data and the projected ridgeline. The user operates the input unit 120 to update the camera parameters 145 in such a manner that the position of the feature line displayed on the display unit 130 matches the position of the ridgeline. The preprocessing unit 152 reprojects the ridgeline every time the camera parameters 145 are updated. By repeating such processing, the preprocessing unit 152 matches the feature line extracted from the image data 11 with the projected ridgeline, thereby adjusting the camera parameters 145.

The preprocessing unit 152 estimates the heights of the head, the shoulders, and the waist of the person on the basis of the skeleton shape data 143. The preprocessing unit 152 estimates the homography matrices $H_h$, $H_s$, $H_w$, and $H_g$ of the head position coordinates plane 20h, the shoulder position coordinates plane 20s, the waist position coordinates plane 20w, and the ground surface position coordinates plane 20g by executing the processing described with reference to FIG. 6. The preprocessing unit 152 registers the estimated result in the homography table 144.

The sequential processing unit 153 estimates the similarity transformation parameters 146 by executing the above-described sequential processing.

For example, the sequential processing unit 153 acquires image data including the person from the video buffer 141 and inputs the image data to the first machine learning model to extract the rectangular region of the person. The sequential processing unit 153 detects the two-dimensional skeleton information of the person by inputting the image of the rectangular region of the person to the second machine learning model.

The sequential processing unit 153 estimates the coordinates of each of the key parts (head, both shoulders, waist, and both feet) in the local coordinate system on the basis of the two-dimensional skeleton information. In addition, the sequential processing unit 153 estimates the coordinates of each of the key parts in the global coordinate system on the basis of the two-dimensional skeleton information. The two-dimensional skeleton information corresponds to the coordinates of the image coordinate system. The relationship among the image coordinate system, the local coordinate system, and the global coordinate system has been described with reference to FIG. 9.

Here, in the case of estimating the coordinates of each of the key parts in the global coordinate system on the basis of the two-dimensional skeleton information, the sequential processing unit 153 uses the homography matrices H stored in the homography table 144. The sequential processing unit 153 estimates three-dimensional coordinates (coordinates in the global coordinate system) of each of the key parts on the basis of Equations (1) to (7).

After calculating the coordinates of each of the key parts in the global coordinate system, the sequential processing unit 153 calculates the reliability of the coordinates of each of the key parts. The sequential processing unit 153 selects, from among the key parts, a key part corresponding to coordinates whose reliability is greater than or equal to the threshold (selected part). The sequential processing unit 153 estimates the similarity transformation parameters 146 for transforming coordinates in the local coordinate system into coordinates in the global coordinate system on the basis of the relationship between the coordinates of the selected part in the local coordinate system and the coordinates of the selected part in the global coordinate system. The sequential processing unit 153 registers the estimated similarity transformation parameters 146 in the storage unit 140.

The sequential processing unit 153 transforms the coordinates of each of the parts in the local coordinate system into the coordinates of the part in the global coordinate system on the basis of the similarity transformation parameters 146 and Equation (8). The sequential processing unit 153 estimates the skeleton information of the person that is obtained by conversion into the coordinates in the global coordinate system by executing such processing. The sequential processing unit 153 stores the estimated skeleton information in the skeleton data table 147. The sequential processing unit 153 repeatedly performs the processing on a plurality of pieces of image data stored in the video buffer 141.

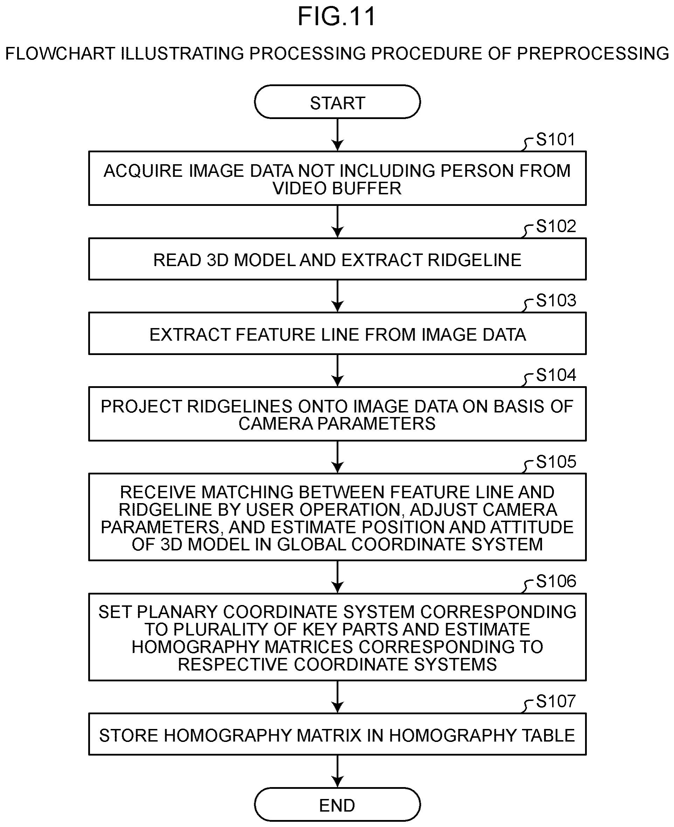

Next, an example of the processing procedure of the information processing device 100 according to the present embodiment will be described. FIG. 11 is a flowchart illustrating the processing procedure of the preprocessing. As illustrated in FIG. 11, the preprocessing unit 152 of the information processing device 100 acquires image data including no person from the video buffer 141 (Step S101).

The preprocessing unit 152 reads the 3D model 142 and extracts a ridgeline (Step S102). The preprocessing unit 152 extracts a feature line from the image data (Step S103). The preprocessing unit 152 projects the ridgeline onto the image data on the basis of the camera parameters 145 (Step S104).

The preprocessing unit 152 receives matching between the feature line and the ridgeline by a user operation, adjusts the camera parameters 145, and estimates the position and the attitude of the 3D model 142 in the global coordinate system (Step S105).

The preprocessing unit 152 sets a planary coordinate system corresponding to the plurality of key parts and estimates homography matrices corresponding to the respective coordinate systems (Step S106). The preprocessing unit 152 stores the homography matrices in the homography table 144 (Step S107).

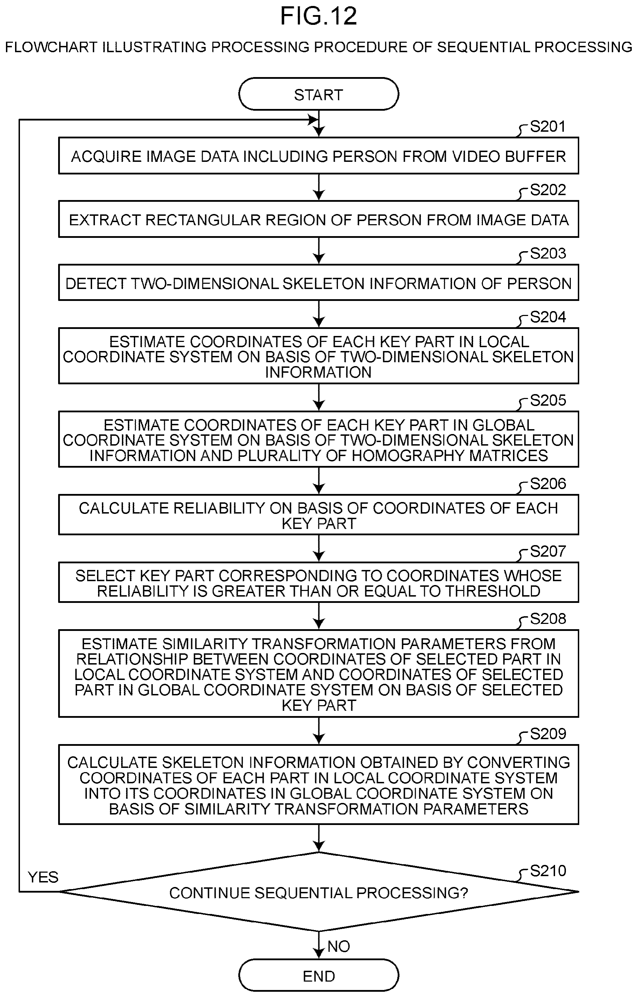

FIG. 12 is a flowchart illustrating the processing procedure of the sequential processing. As illustrated in FIG. 12, the sequential processing unit 153 of the information processing device 100 acquires image data including a person from the video buffer 141 (Step S201).

The sequential processing unit 153 extracts a rectangular region of the person from the image data (Step S202). The sequential processing unit 153 detects two-dimensional skeleton information on the basis of the image of the rectangular region of the person (Step S203). The sequential processing unit 153 estimates the coordinates of each of the key parts in the local coordinate system on the basis of the two-dimensional skeleton information (Step S204).

The sequential processing unit 153 estimates the coordinates of each of the key parts in the global coordinate system on the basis of the two-dimensional skeleton information and the plurality of homography matrices (Step S205). The sequential processing unit 153 calculates the reliability on the basis of the coordinates of each of the key parts (Step S206).

The sequential processing unit 153 selects a key part corresponding to coordinates whose reliability is greater than or equal to the threshold (Step S207). The sequential processing unit 153 estimates the similarity transformation parameters from the relationship between the coordinates of the selected part in the local coordinate system and the coordinates of the selected part in the global coordinate system on the basis of the selected key part (Step S208).

The sequential processing unit 153 calculates skeleton information obtained by converting the coordinates of each of the parts in the local coordinate system into the coordinates of the part in the global coordinate system on the basis of the similarity transformation parameters (Step S209).

If the sequential processing is continued (Step S210, Yes), the sequential processing unit 153 proceeds to Step S201. On the other hand, if the sequential processing is not continued (Step S210, No), the sequential processing unit 153 ends the processing.

Next, effects of the information processing device 100 according to the present embodiment will be described. The information processing device 100 generates the coordinates of the key parts in the local coordinate system and the coordinates of the key parts in the global coordinate system on the basis of the two-dimensional skeleton information of the person included in the video data. The information processing device 100 estimates the similarity transformation parameters from the relationship between coordinates in the local coordinate system and coordinates in the global coordinate system of a key part that is not hidden among the plurality of key parts and specifies coordinates of each of the parts in the global coordinate system using the similarity transformation parameters. As a result, the information processing device 100 estimates the similarity transformation parameters by using the coordinates of a key part with high reliability other than a key part where occlusion has occurred and thus can accurately estimate the three-dimensional coordinates of each of the parts of the person in the global coordinate system.

The information processing device 100 specifies the reliability of the coordinates of each of the key parts on the basis of the positional relationship among the coordinates of the key parts in the global coordinate system and specifies a key part of the person that is not hidden from among the plurality of key parts on the basis of the reliability. As a result, it is possible to appropriately specify a key part where no occlusion has occurred.

The information processing device 100 specifies at least three or more key parts on the basis of the reliability. As a result, the similarity transformation parameters can be calculated.

The information processing device 100 generates coordinates of the key parts in the global coordinate system on the basis of the two-dimensional skeleton information and the plurality of homography matrices **H. As** a result, the coordinates of each of the key parts in the global coordinate system corresponding to the key part can be obtained.

Incidentally, the processing content of the information processing device 100 described above is an example, and the information processing device 100 may execute other processing. For example, the information processing device 100 sets the values **h, s,** and w in the z axis of the global coordinate system using the skeleton shape data of the adult male; however, it is not limited thereto. The information processing device 100 may prepare skeleton shape data for each attribute such as gender and age and select and use the skeleton shape data depending on the attribute of the person included in the image data.

Furthermore, the information processing device 100 may estimate the state of the person on the basis of the two-dimensional skeleton information and, in the case of an upright state, execute the above processing to specify the coordinates in the global coordinate system. The information processing device 100 may use the two-dimensional coordinates of each of the parts (joints) and the angle of the part as feature values to determine whether or not the person is in the upright state by referring to "G. Tatkare et al., Gender Recognition and Age Approximation using Deep Learning Techniques. International Journal of Engineering Research and. V9. 10.17577/IJERTV9IS040268. 2020.". By specifying the coordinates in the global coordinate system only when the person is in the upright state, the accuracy of the coordinates can be improved.

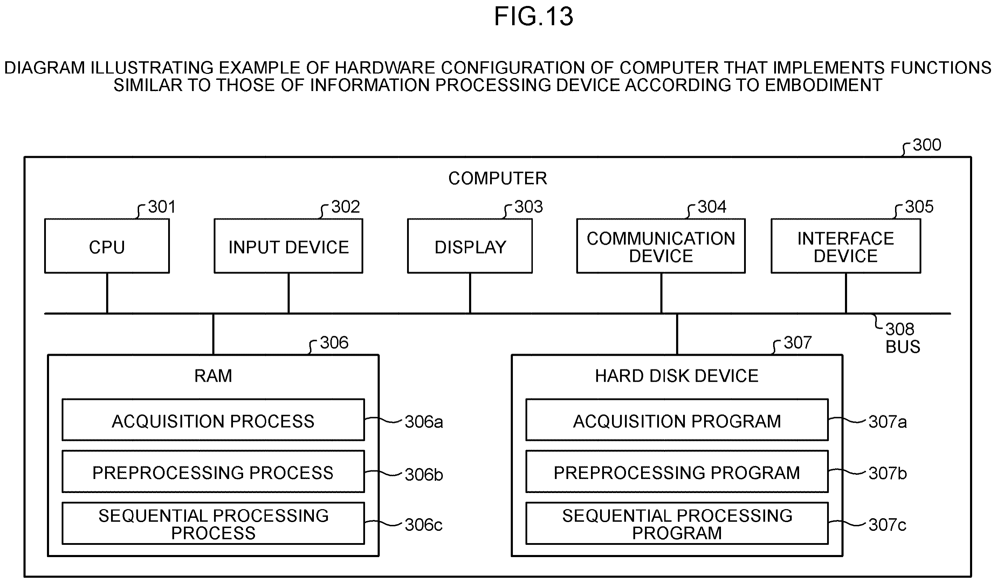

Next, an example of the hardware configuration of a computer that implements functions similar to those of the information processing device 100 described above will be described. FIG. 13 is a diagram illustrating an example of the hardware configuration of a computer that implements functions similar to those of the information processing device of the embodiment.

As illustrated in FIG. 13, a computer 300 includes a CPU 301 that executes various types of arithmetic processing, an input device 302 that receives input of data from a user, and a display 303. The computer 300 further includes a communication device 304 that exchanges data with the camera 10, an external device, and the like via a wired or wireless network and an interface device 305. In addition, the computer 300 includes a RAM 306 that temporarily stores various types of information and a hard disk device 307. Each of the devices 301 to 307 is connected to a bus 308.

The hard disk device 307 includes an acquisition program 307a, a preprocessing program 307b, and a sequential processing program 307c. The CPU301 reads the programs 307a to 307d and develops the programs in the RAM 306.

The acquisition program 307a functions as an acquisition process 306a. The preprocessing program 307b functions as a preprocessing process 306b. The sequential processing program 307c functions as a sequential processing process 306c.

The processing of the acquisition process 306a corresponds to the processing by the acquisition unit 151. The processing of the preprocessing process 306b corresponds to the processing by the preprocessing unit 152. The processing of the sequential processing process 306c corresponds to the processing of the sequential processing unit 153.

Note that the programs 307a to 307c do not necessarily need to be stored in the hard disk device 307 from the beginning. For example, the programs are stored in a "portable physical medium" such as a flexible disk (FD), a CD-ROM, a DVD, a magneto-optical disk, or an IC card inserted into the computer 300. The computer 300 may read and execute the programs 307a to 307c.

Regarding embodiments including the above embodiments, the following supplementary notes are further disclosed.

(Supplementary note 1) A specifying program that causes a computer to execute the processing of:

acquiring a video in which a person is captured;
generating two-dimensional skeleton information of the person from the video that has been acquired;
generating relative coordinates of a three-dimensional skeleton position based on a position of a waist of the person on a basis of the two-dimensional skeleton information;
generating absolute coordinates of a three-dimensional skeleton position of a plurality of predetermined parts of the person;
estimating a relationship between the relative coordinates and the absolute coordinates on a basis of absolute coordinates of the three-dimensional skeleton position corresponding to a part of the person that is not hidden and relative coordinates of the three-dimensional skeleton position corresponding to the part of the person that is not hidden; and
specifying absolute coordinates of a skeleton position of the person including a part other than the part that is not hidden or a part other than the predetermined parts on a basis of the relationship that has been estimated.

(Supplementary note 2) The specifying program according to supplementary note 1, the specifying program causing the computer to further execute the processing of:
specifying reliability of the absolute coordinates for respective parts on a basis of a positional relationship between absolute coordinates of three-dimensional skeleton positions of the plurality of predetermined parts of the person; and specifying a part of the person that is not hidden from among the plurality of predetermined parts of the person on a basis of reliability of the absolute coordinates of skeleton positions of the respective parts.

(Supplementary note 3) The specifying program according to supplementary note 2, in which, in the processing of estimating the relationship, processing of selecting absolute coordinates of skeleton positions of at least three parts on a basis of the reliability of the absolute coordinates of the skeleton positions of the respective parts is further executed.

(Supplementary note 4) The specifying program according to supplementary note 1, in which, in the processing of generating the absolute coordinates, absolute coordinates of the three-dimensional skeleton position are generated on a basis of a plurality of homographies corresponding to respective coordinate systems of the plurality of predetermined parts of the person, the plurality of homographies defining a position in a virtual space corresponding to a position in the video, and the two-dimensional skeleton information.

(Supplementary note 5) The specifying program according to supplementary note 4, in which, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

(Supplementary note 6) A specifying method of causing a computer to execute the processing of:

acquiring a video in which a person is captured;
generating two-dimensional skeleton information of the person from the video that has been acquired;
generating relative coordinates of a three-dimensional skeleton position based on a position of a waist of the person on a basis of the two-dimensional skeleton information;
generating absolute coordinates of a three-dimensional skeleton position of a plurality of predetermined parts of the person;

estimating a relationship between the relative coordinates and the absolute coordinates on a basis of absolute coordinates of the three-dimensional skeleton position corresponding to a part of the person that is not hidden and relative coordinates of the three-dimensional skeleton position corresponding to the part of the person that is not hidden; and specifying absolute coordinates of a skeleton position of the person including a part other than the part that is not hidden or a part other than the predetermined parts on a basis of the relationship that has been estimated.

(Supplementary note 7) The specifying method according to supplementary note 6, the specifying method causing the computer to further execute the processing of:
specifying reliability of the absolute coordinates for respective parts on a basis of a positional relationship between absolute coordinates of three-dimensional skeleton positions of the plurality of predetermined parts of the person; and specifying a part of the person that is not hidden from among the plurality of predetermined parts of the person on a basis of reliability of the absolute coordinates of skeleton positions of the respective parts.

(Supplementary note 8) The specifying method according to supplementary note 7, in which, in the processing of estimating the relationship, processing of selecting absolute coordinates of skeleton positions of at least three parts on a basis of the reliability of the absolute coordinates of the skeleton positions of the respective parts is further executed.

(Supplementary note 9) The specifying method according to supplementary note 6, in which, in the processing of generating the absolute coordinates, absolute coordinates of the three-dimensional skeleton position are generated on a basis of a plurality of homographies corresponding to respective coordinate systems of the plurality of predetermined parts of the person, the plurality of homographies defining a position in a virtual space corresponding to a position in the video, and the two-dimensional skeleton information.

(Supplementary note 10) The specifying method according to supplementary note 9, in which, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

(Supplementary note 11) An information processing device, comprising a control unit that executes processing of:

acquiring a video in which a person is captured;
generating two-dimensional skeleton information of the person from the video that has been acquired;
generating relative coordinates of a three-dimensional skeleton position based on a position of a waist of the person on a basis of the two-dimensional skeleton information;
generating absolute coordinates of a three-dimensional skeleton position of a plurality of predetermined parts of the person;
estimating a relationship between the relative coordinates and the absolute coordinates on a basis of absolute coordinates of the three-dimensional skeleton position corresponding to a part of the person that is not hidden and relative coordinates of the three-dimensional skeleton position corresponding to the part of the person that is not hidden; and specifying absolute coordinates of a skeleton position of the person including a part other than the part that is not hidden or a part other than the predetermined parts on a basis of the relationship that has been estimated.

(Supplementary note 12) The information processing device according to supplementary note 11, in which the control unit further executes the processing of specifying reliability of the absolute coordinates for respective parts on a basis of a positional relationship between absolute coordinates of three-dimensional skeleton positions of the plurality of predetermined parts of the person; and specifying a part of the person that is not hidden from among the plurality of predetermined parts of the person on a basis of reliability of the absolute coordinates of skeleton positions of the respective parts.

(Supplementary note 13) The information processing device according to supplementary note 12, in which, in the processing of estimating the relationship, processing of selecting absolute coordinates of skeleton positions of at least three parts on a basis of the reliability of the absolute coordinates of the skeleton positions of the respective parts is further executed.

(Supplementary note 14) The information processing device according to supplementary note 11, in which, in the processing of generating the absolute coordinates, absolute coordinates of the three-dimensional skeleton position are generated on a basis of a plurality of homographies corresponding to respective coordinate systems of the plurality of predetermined parts of the person, the plurality of homographies defining a position in a virtual space corresponding to a position in the video, and the two-dimensional skeleton information.

(Supplementary note 15) The information processing device according to supplementary note 14, in which, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

Reference Signs List

100 INFORMATION PROCESSING DEVICE

110 COMMUNICATION UNIT

120 INPUT UNIT

130 DISPLAY UNIT

140 STORAGE UNIT

141 VIDEO BUFFER

142 3D MODEL

143 SKELETON SHAPE DATA

144 HOMOGRAPHY TABLE

145 CAMERA PARAMETER

146 SIMILARITY TRANSFORMATION PARAMETER

147 SKELETON DATA TABLE

150 CONTROL UNIT

151 ACQUISITION UNIT

152 PREPROCESSING UNIT

153 SEQUENTIAL PROCESSING UNIT

**Claims**

1. A specifying program that causes a computer to execute the processing of:

    acquiring a video in which a person is captured;
    generating two-dimensional skeleton information of the person from the video that has been acquired;
    generating relative coordinates of a three-dimensional skeleton position based on a position of a waist of the person based on the two-dimensional skeleton information;
    generating absolute coordinates of a three-dimensional skeleton position of a plurality of predetermined parts of the person;
    estimating a relationship between the relative coordinates and the absolute coordinates based on absolute coordinates of the three-dimensional skeleton position corresponding to a part of the person that is not hidden and relative coordinates of the three-dimensional skeleton position corresponding to the part of the person that is not hidden; and
    specifying absolute coordinates of a skeleton position of the person including a part other than the part that is not hidden or a part other than the predetermined parts based on the relationship that has been estimated.

2. The specifying program according to claim 1, the specifying program causing the computer to further execute the processing of:
    specifying reliability of the absolute coordinates for respective parts based on a positional relationship between absolute coordinates of three-dimensional skeleton positions of the plurality of predetermined parts of the person; and specifying a part of the person that is not hidden from among the plurality of predetermined parts of the person based on reliability of the absolute coordinates of skeleton positions of the respective parts.

3. The specifying program according to claim 2, wherein, in the processing of estimating the relationship, processing of selecting absolute coordinates of skeleton positions of at least three parts based on the reliability of the absolute coordinates of the skeleton positions of the respective parts is further executed.

4. The specifying program according to claim 1, wherein, in the processing of generating the absolute coordinates, absolute coordinates of the three-dimensional skeleton position are generated based on a plurality of homographies corresponding to respective coordinate systems of the plurality of predetermined parts of the person, the plurality of homographies defining a position in a virtual space corresponding to a position in the video, and the two-dimensional skeleton information.

5. The specifying program according to claim 4, wherein, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

6. A specifying method of causing a computer to execute the processing of:

    acquiring a video in which a person is captured;
    generating two-dimensional skeleton information of the person from the video that has been acquired;
    generating relative coordinates of a three-dimensional skeleton position based on a position of a waist of the person based on the two-dimensional skeleton information;

generating absolute coordinates of a three-dimensional skeleton position of a plurality of predetermined parts of the person;

estimating a relationship between the relative coordinates and the absolute coordinates based on absolute coordinates of the three-dimensional skeleton position corresponding to a part of the person that is not hidden and relative coordinates of the three-dimensional skeleton position corresponding to the part of the person that is not hidden; and

specifying absolute coordinates of a skeleton position of the person including a part other than the part that is not hidden or a part other than the predetermined parts based on the relationship that has been estimated.

7. The specifying method according to claim 6, the specifying method causing the computer to further execute the processing of:
specifying reliability of the absolute coordinates for respective parts based on a positional relationship between absolute coordinates of three-dimensional skeleton positions of the plurality of predetermined parts of the person; and specifying a part of the person that is not hidden from among the plurality of predetermined parts of the person based on reliability of the absolute coordinates of skeleton positions of the respective parts.

8. The specifying method according to claim 7, wherein, in the processing of estimating the relationship, processing of selecting absolute coordinates of skeleton positions of at least three parts based on the reliability of the absolute coordinates of the skeleton positions of the respective parts is further executed.

9. The specifying method according to claim 6, wherein, in the processing of generating the absolute coordinates, absolute coordinates of the three-dimensional skeleton position are generated based on a plurality of homographies corresponding to respective coordinate systems of the plurality of predetermined parts of the person, the plurality of homographies defining a position in a virtual space corresponding to a position in the video, and the two-dimensional skeleton information.

10. The specifying method according to claim 9, wherein, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

11. An information processing device, comprising a control unit that executes processing of:

acquiring a video in which a person is captured;

generating two-dimensional skeleton information of the person from the video that has been acquired;

generating relative coordinates of a three-dimensional skeleton position based on a position of a waist of the person based on the two-dimensional skeleton information;

generating absolute coordinates of a three-dimensional skeleton position of a plurality of predetermined parts of the person;

estimating a relationship between the relative coordinates and the absolute coordinates based on absolute coordinates of the three-dimensional skeleton position corresponding to a part of the person that is not hidden and relative coordinates of the three-dimensional skeleton position corresponding to the part of the person that is not hidden; and

specifying absolute coordinates of a skeleton position of the person including a part other than the part that is not hidden or a part other than the predetermined parts based on the relationship that has been estimated.

12. The information processing device according to claim 11,
wherein the control unit further executes the processing of specifying reliability of the absolute coordinates for respective parts based on a positional relationship between absolute coordinates of three-dimensional skeleton positions of the plurality of predetermined parts of the person; and specifying a part of the person that is not hidden from among the plurality of predetermined parts of the person based on reliability of the absolute coordinates of skeleton positions of the respective parts.

13. The information processing device according to claim 12, wherein, in the processing of estimating the relationship, processing of selecting absolute coordinates of skeleton positions of at least three parts based on the reliability of the absolute coordinates of the skeleton positions of the respective parts is further executed.

14. The information processing device according to claim 11, wherein, in the processing of generating the absolute coordinates, absolute coordinates of the three-dimensional skeleton position are generated based on a plurality of homographies corresponding to respective coordinate systems of the plurality of predetermined parts of the person, the plurality of homographies defining a position in a virtual space corresponding to a position in the video, and the two-dimensional skeleton information.

**15.** The information processing device according to claim 14, wherein, in the processing of generating the absolute coordinates, a head, both shoulders, a waist, and both feet of the person are set as the plurality of predetermined parts, and absolute coordinates of three-dimensional skeleton positions of the plurality of predetermined parts are generated.

# FIG.1

DIAGRAM ILLUSTRATING SYSTEM ACCORDING TO PRESENT EMBODIMENT

# FIG.2

DIAGRAM ILLUSTRATING EXAMPLE OF IMAGE DATA USED IN PREPROCESSING

# FIG.3

DIAGRAM ILLUSTRATING EXAMPLE OF 3D MODEL

# FIG.4

DIAGRAM ILLUSTRATING EXAMPLE OF ESTIMATION RESULTS OF POSITION AND ATTITUDE

# FIG.5

## DIAGRAM ILLUSTRATING EXAMPLE OF FOUR TYPES OF COORDINATE SYSTEMS

# FIG.6

DIAGRAM FOR EXPLAINING PROCESSING OF ESTIMATING HOMOGRAPHY MATRIX

EP 4 654 124 A1

# FIG.7

## DIAGRAM ILLUSTRATING EXAMPLE OF IMAGE DATA USED IN SEQUENTIAL PROCESSING

# FIG.8
## DIAGRAM ILLUSTRATING EXAMPLE OF TWO-DIMENSIONAL SKELETON INFORMATION

# FIG.9

### DIAGRAM FOR EXPLAINING RELATIONSHIP BETWEEN TWO-DIMENSIONAL COORDINATES AND THREE-DIMENSIONAL COORDINATES

IMAGE COORDINATE SYSTEM

LOCAL COORDINATE SYSTEM

GLOBAL COORDINATE SYSTEM

# FIG.10

FUNCTIONAL BLOCK DIAGRAM ILLUSTRATING CONFIGURATION OF INFORMATION
PROCESSING DEVICE ACCORDING TO PRESENT EMBODIMENT

# FIG.11

FLOWCHART ILLUSTRATING PROCESSING PROCEDURE OF PREPROCESSING

```
                    START

                                              S101
    ACQUIRE IMAGE DATA NOT INCLUDING PERSON FROM
                  VIDEO BUFFER

                                              S102
       READ 3D MODEL AND EXTRACT RIDGELINE

                                              S103
       EXTRACT FEATURE LINE FROM IMAGE DATA

                                              S104
    PROJECT RIDGELINES ONTO IMAGE DATA ON BASIS OF
                CAMERA PARAMETERS

                                              S105
    RECEIVE MATCHING BETWEEN FEATURE LINE AND
    RIDGELINE BY USER OPERATION, ADJUST CAMERA
    PARAMETERS, AND ESTIMATE POSITION AND ATTITUDE
     OF 3D MODEL IN GLOBAL COORDINATE SYSTEM

                                              S106
    SET PLANARY COORDINATE SYSTEM CORRESPONDING
        TO PLURALITY OF KEY PARTS AND ESTIMATE
     HOMOGRAPHY MATRICES CORRESPONDING TO
          RESPECTIVE COORDINATE SYSTEMS

                                              S107
    STORE HOMOGRAPHY MATRIX IN HOMOGRAPHY TABLE

                      END
```

# FIG.12

FLOWCHART ILLUSTRATING PROCESSING PROCEDURE OF SEQUENTIAL PROCESSING

START

S201
ACQUIRE IMAGE DATA INCLUDING PERSON FROM VIDEO BUFFER

S202
EXTRACT RECTANGULAR REGION OF PERSON FROM IMAGE DATA

S203
DETECT TWO-DIMENSIONAL SKELETON INFORMATION OF PERSON

S204
ESTIMATE COORDINATES OF EACH KEY PART IN LOCAL COORDINATE SYSTEM ON BASIS OF TWO-DIMENSIONAL SKELETON INFORMATION

S205
ESTIMATE COORDINATES OF EACH KEY PART IN GLOBAL COORDINATE SYSTEM ON BASIS OF TWO-DIMENSIONAL SKELETON INFORMATION AND PLURALITY OF HOMOGRAPHY MATRICES

S206
CALCULATE RELIABILITY ON BASIS OF COORDINATES OF EACH KEY PART

S207
SELECT KEY PART CORRESPONDING TO COORDINATES WHOSE RELIABILITY IS GREATER THAN OR EQUAL TO THRESHOLD

S208
ESTIMATE SIMILARITY TRANSFORMATION PARAMETERS FROM RELATIONSHIP BETWEEN COORDINATES OF SELECTED PART IN LOCAL COORDINATE SYSTEM AND COORDINATES OF SELECTED PART IN GLOBAL COORDINATE SYSTEM ON BASIS OF SELECTED KEY PART

S209
CALCULATE SKELETON INFORMATION OBTAINED BY CONVERTING COORDINATES OF EACH PART IN LOCAL COORDINATE SYSTEM INTO ITS COORDINATES IN GLOBAL COORDINATE SYSTEM ON BASIS OF SIMILARITY TRANSFORMATION PARAMETERS

YES

S210
CONTINUE SEQUENTIAL PROCESSING?

NO

END

# FIG.13

DIAGRAM ILLUSTRATING EXAMPLE OF HARDWARE CONFIGURATION OF COMPUTER THAT IMPLEMENTS FUNCTIONS SIMILAR TO THOSE OF INFORMATION PROCESSING DEVICE ACCORDING TO EMBODIMENT

┌─300

**COMPUTER**

| 301 | 302 | 303 | 304 | 305 |
|---|---|---|---|---|
| CPU | INPUT DEVICE | DISPLAY | COMMUNICATION DEVICE | INTERFACE DEVICE |

308
BUS

**306 — RAM**

| | |
|---|---|
| ACQUISITION PROCESS | 306a |
| PREPROCESSING PROCESS | 306b |
| SEQUENTIAL PROCESSING PROCESS | 306c |

**307 — HARD DISK DEVICE**

| | |
|---|---|
| ACQUISITION PROGRAM | 307a |
| PREPROCESSING PROGRAM | 307b |
| SEQUENTIAL PROCESSING PROGRAM | 307c |

EP 4 654 124 A1

## INTERNATIONAL SEARCH REPORT

| International application No. |
| --- |
| **PCT/JP2023/044151** |

### A. CLASSIFICATION OF SUBJECT MATTER

*G06T 7/00*(2017.01)i; *G06T 7/70*(2017.01)i
FI: G06T7/00 660B; G06T7/70 Z

According to International Patent Classification (IPC) or to both national classification and IPC

### B. FIELDS SEARCHED

Minimum documentation searched (classification system followed by classification symbols)

G06T7/00; G06T7/70

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2022-049521 A (FUJITSU LIMITED) 29 March 2022 (2022-03-29)<br>entire text, all drawings | 1-15 |
| A | JP 2020-135551 A (SECOM CO., LTD.) 31 August 2020 (2020-08-31)<br>entire text, all drawings | 1-15 |
| A | JP 2022-121280 A (FUJITSU LIMITED) 19 August 2022 (2022-08-19)<br>entire text, all drawings | 1-15 |
| A | JP 2022-176481 A (FUJITSU LIMITED) 30 November 2022 (2022-11-30)<br>entire text, all drawings | 1-15 |

☐ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 February 2024** | **27 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/044151**

| Patent document cited in search report | | | Publication date (day/month/year) | Patent family member(s) | | | Publication date (day/month/year) |
|---|---|---|---|---|---|---|---|
| JP | 2022-049521 | A | 29 March 2022 | US | 2022/0083771 | A1 | |
| | | | | entire text, all drawings | | | |
| | | | | EP | 3971822 | A2 | |
| | | | | CN | 114266691 | A | |
| JP | 2020-135551 | A | 31 August 2020 | (Family: none) | | | |
| JP | 2022-121280 | A | 19 August 2022 | (Family: none) | | | |
| JP | 2022-176481 | A | 30 November 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022176481 A

**Non-patent literature cited in the description**

- **R. HARTLEY** ; **A. ZISSERMAN**. Multiple View Geometry In Computer Vision. Cambridge University Press, 2003
- **REDMON et al.** You Only Look Once: Unified, Real-Time Object Detection. *Proc. IEEE Conference on Computer Vision and Pattern Recognition (CVPR*, 2016, 779-788
- **Y. CHEN et al.** Cascaded Pyramid Network for Multi-person Pose Estimation. *Proc. IEEE Conference on Computer Vision and Pattern Recognition (CVPR)*, 2018, 7103-7112
- **J. MARTINEZ et al.** A simple yet effective baseline for 3d human pose estimation. *Proc. IEEE International Conference on Computer Vision (ICCV)*, 2017, 2659-2668
- **K. MARDIA et al.** Multivariate Analysis.. Academic Press, 1979
- **G. TATKARE et al.** Gender Recognition and Age Approximation using Deep Learning Techniques. *International Journal of Engineering Research*, 2020, vol. 9